# EUROPÄISCHE PATENTSCHRIFT

(11) **EP 0 840 849 B1**
(45) Veröffentlichungstag und Bekanntmachung des Hinweises auf die Patenterteilung: **15.09.1999**
(21) Anmeldenummer: 96923888.0
(22) Anmeldetag: 21.06.1996
(51) Int. Cl.: F02P 5/04, F02P 5/15

(54) **VERFAHREN ZUM STEUERN DES ZÜNDZEITPUNKTES BEI BRENNKRAFTMASCHINEN**
PROCESS FOR CONTROLLING THE IGNITION POINT IN INTERNAL COMBUSTION ENGINES
PROCEDE DE COMMANDE DU POINT D'ALLUMAGE DANS LES MOTEURS A COMBUSTION INTERNE

(30) Priorität: 27.07.1995 DE 19527550
(43) Veröffentlichungstag der Anmeldung: 13.05.1998
(60) Teilanmeldung: 98101758.5
(73) Patentinhaber: Ficht GmbH & Co. KG, 85614 Kirchseeon (DE)
(72) Erfinder: HELLMICH, Wolfram, D-81829 München (DE)
(74) Vertreter: Solf, Alexander, Dr.
(86) Internationale Anmeldenummer: EP9602711
(87) Internationale Veröffentlichungsnummer: WO9705379

(56) Entgegenhaltungen:
- WO-A-93/18296
- DE-A- 2 719 809
- DE-A- 3 319 025
- DE-A- 4 020 298
- FR-A- 1 271 399
- US-A- 3 892 207
- US-A- 3 964 454
- US-A- 4 621 599
- PATENT ABSTRACTS OF JAPAN vol. 012, no. 475 (M-774), 13.Dezember 1988 & JP 63 195385 A (TOYO DENSO CO LTD), 12.August 1988,
- PATENT ABSTRACTS OF JAPAN vol. 009, no. 014 (M-352), 22.Januar 1985 & JP 59 162366 A (HONDA GIKEN KOGYO KK), 13.September 1984,

## Beschreibung

Die Erfindung betrifft ein Verfahren zum Steuern des Zündzeitpunktes bei Brennkraftmaschinen.

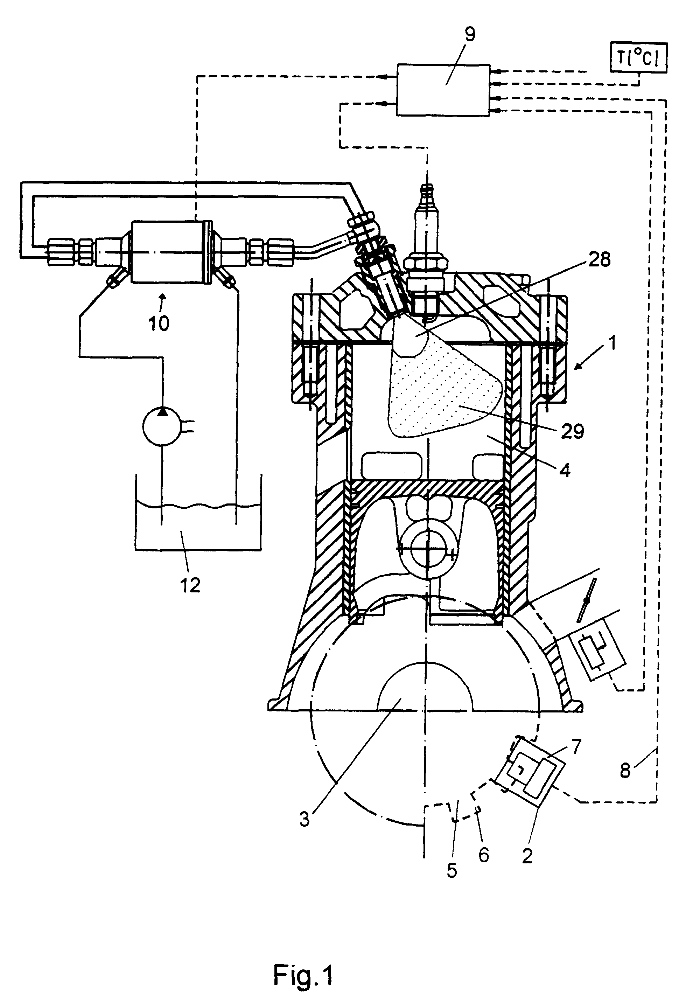

Moderne Brennkraftmaschinen 1 (Fig. 1) weisen elektronische Zündanlagen auf, die mit einem Kurbelwellenwinkelsensor 2 die Winkelstellung einer Kurbelwelle 3 bezüglich des oberen Totpunkts des Kolbens messen. Diese Zündanlagen bestimmen den Zündzeitpunkt anhand einer vorbestimmten Winkelstellung der Kurbelwelle, d.h. die Zündung eines zuvor in einen Brennraum 4 zugeführten Kraftstoff/Luft-Gemisches wird bei der vorbestimmten Winkelstellung ausgelöst. Diese Zündanlagen sind in der Regel Bestandteil einer elektronischen Steuereinrichtung der Brennkraftmaschine, die auch die Zufuhr des Kraftstoff/Luft-Gemisches steuert, das bei einer "früheren" bzw. vorläufigen Winkelstellung dem Brennraum 4 zugeführt wird.

Bei Saugmotoren und herkömmlichen Niederdruckeinspritzvorrichtungen entspricht die für die Zufuhr des Kraftstoff/Luft-Gemisches notwendige Zeitdauer einem beträchtlichen Kurbelwinkelbereich. Der Zeitpunkt für die Gemischzufuhr wird zwar auch wie der Zündzeitpunkt bei einer vorbestimmten Winkelstellung der Kurbelwelle ausgelöst, jedoch wird bei einfachen Steuereinrichtungen der Zeitpunkt des Beginns der Gemischzufuhr nicht so exakt wie der Zündzeitpunkt bestimmt, da man davon ausgeht, daß die Verbrennung im wesentlichen durch den Zündzeitpunkt beeinflußt wird und aufgrund der langen Dauer der Kraftstoffzufuhr eine genaue Bestimmung des Beginns der Kraftstoffzufuhr nicht notwendig ist.

Bei Brennkraftmaschinen 1 mit einer Einspritzvorrichtung 10 ist es üblich, mit einer einzigen Steuereinrichtung 9 sowohl den Einspritzvorgang als auch den Zündzeitpunkt zu steuern. Bei Hochdruck-Einspritzvorrichtungen wird der Kraftstoff bzw. das Kraftstoff/Luft-Gemisch in wesentlich kürzeren Zeitbereichen dem Brennraum 4 zugeführt, so daß bei Verwendung derartiger Hochdruck-Einspritzvorrichtungen, insbesondere bei einer Direkteinspritzung des Kraftstoffes in den Brennraum 4, auch der Zeitpunkt des Einspritzvorganges exakt bestimmt und bei einer vorbestimmten Winkelstellung der Kurbelwelle ausgelöst wird. Die exakte Messung der Winkelstellung der Kurbelwelle sowohl für den Einspritzvorgang als auch für den Zündzeitpunkt bedeutet einen erheblichen Rechenaufwand für die Steuereinrichtung 9, wobei der Meßvorgang zweimal innerhalb sehr kurzer Zeit durchzuführen ist.

Hochdruck-Einspritzvorrichtungen, die nach dem Energiespeicherprinzip arbeiten, sind beispielsweise aus der WO 92/14925 bzw. der WO 93/18296 bekannt. Mit diesen Hochdruck-Einspritzvorrichtungen wird der Kraftstoff in sehr kurzen Impulsen in den Brennraum eingespritzt. Ferner gibt es Hochdruckeinspritzvorrichtungen, die nach dem Festkörper-Energiespeicherprinzip arbeiten, sogenannte "PDS-Einspritzvorrichtungen" (Pumpe-Düse-Systeme), die beispielsweise in der deutschen Patentanmeldung P 195 15 781 und P 195 15 782 beschrieben sind. Diese PDS-Einspritzvorrichtungen sind insbesondere zum direkten Einspritzen des Kraftstoffes in den Brennraum vorgesehen, wobei die Zeitdauer für einen Einspritzvorgang im Leerlauf weniger als eine halbe Millisekunde betragen kann. Der zum Messen der Winkelstellung der Kurbelwelle verwendete Kurbelwellenwinkelsensor 2 besteht aus einer Zahnscheibe 5 mit am Umfang angeordneten Zähnen 6 und einem Sensorelement 7, das am Umfangsbereich der Zahnscheibe 5 angeordnet ist und den Durchgang der Zähne 6 wahrnimmt und in ein entsprechendes elektrisches Pulssignal wandelt. Das elektrische Signal wird mit einer Leitung 8 der Steuereinrichtung 9 zugeführt. Bei hohen Drehzahlen weist das Signal des Kurbelwellenwinkelsensors 2 eine hohe Zeitauflösung auf, da die Zeitabstände des Durchgangs zweier aufeinanderfolgender Zähne 6 am Sensorelement 7 sehr kurz sind. Andererseits sind diese Zeitabstände bei geringen Drehzahlen (z.B. < 2 000 U/min), wie sie im Leerlaufbetrieb auftreten, groß, so daß die Messung der Drehzahl ungenau wird, insbesondere, wenn sich die Drehzahl während der Messung verändert, da eine Änderung der Drehzahl zwischen dem Durchgang zweier aufeinanderfolgender Zähne 6 mit dem Kurbelwellenwinkelsensor 2 nicht exakt erfaßt werden kann. Solche Drehzahländerungen treten z.B. bei unruhigem Leerlauf auf, so daß durch die Meßabweichungen an der gemessenen Drehzahl eine Korrektur auf eine Leerlauf-Solldrehzahl noch nicht optimal gelöst ist. Die Meßabweichungen verursachen einen hohen Kraftstoffverbrauch mit der Folge einer relativ hohen Schadstoffemission.

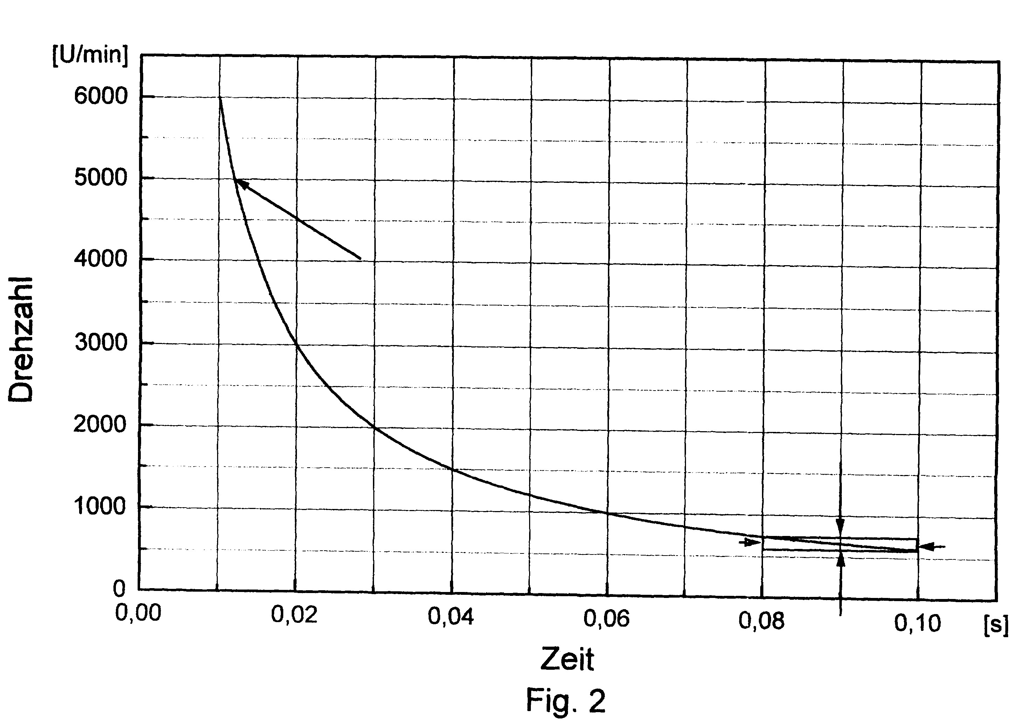

In Fig. 2 ist die Drehzahl einer Brennkraftmaschine [U/min] über die Zeitdauer einer Kurbelwellenumdrehung [s] aufgetragen. Hieraus geht hervor, daß bei geringen Drehzahlen Änderungen in der Drehzahl eine große Änderung in der Umlaufzeit bewirken, und somit hohe Ungenauigkeiten bei der Messung der Drehzahl und große zeitliche Messabweichungen verursachen.

Aus der US 3,892,207 ist eine Brennkraftmaschine bekannt, die eine Steuereinrichtung zum Ansteuern des Einspritzvorganges als auch der Zündung mittels einer einzigen Signalquelle aufweist. Diese Steuereinrichtung steuert unabhängig von der Maschinengeschwindigkeit die Einspritzung und die Zündung mit einem konstanten zeitlichen Verhältnis. Der Beginn der Einspritzung und der Zündung sind durch ein vorbestimmtes Zeitintervall getrennt, das von einer Zeitverzögerungseinrichtung gemessen wird, die unabhängig von der Maschinengeschwindigkeit arbeitet. Dieses Verfahren zur Festlegung des Zündzeitpunktes wird über den gesamten Drehzahlbereich angewandt und soll sogar bei Brennkraftmaschinen anwendbar sein, die größere Drehzahlgeschwindigkeiten als jene für Kraftfahrzeuge besitzen.

Aus der US 4,621,599 geht ein Verfahren zum Einspritzen und Zünden einer Kraftstoffmenge in einen Brennraum einer Brennkraftmaschine hervor, bei welchen zu einer bestimmten Winkelstellung des oberen Totpunktes jeweils eine vorbestimmte Zündmenge an Kraftstoff in den Brennraum eingespritzt wird und gleichzeitig oder mit einer bestimmten Verzögerung diese Zündmenge gezündet wird. Eine zusätzliche Brennstoffmenge wird mit zeitlichem Abstand bezüglich der Zündmenge eingespritzt, die bei geringer Last etwas vermindert wird. Bei grösserer Last wird bezüglich des oberen Totpunktes um eine bestimmte Winkelstellung voreilend eine zusätzliche Kraftstoffmenge eingespritzt. Durch das Vorsehen mehrerer Einspritzpulse ist das Einspritzverfahren sehr aufwendig gestaltet und erfordert einen erheblichen Steuerungsaufwand.

Der Erfindung liegt die Aufgabe zugrunde, ein Verfahren zum Steuern der Zündung in Brennkraftmaschinen zu schaffen, das mit einfachen Mitteln realisiert werden kann und dennoch über den gesamten Drehzahlbereich der Brennkraftmaschine anwendbar ist, besonders bei niedrigen Drehzahlen vornehmlich im Leerlauf eine hohe Laufruhe bewirkt, einen sehr guten Wirkungsgrad verursacht und die Schadstoffemission erheblich reduziert.

Die Aufgabe wird durch ein Verfahren mit den Merkmalen des Anspruchs 1 gelöst. In den Unteransprüchen sind vorteilhafte Ausgestaltungen gekennzeichnet.

Erfindungsgemäß wird der Zündzeitpunkt unterhalb einer vorbestimmten Last- oder Drehzahlschwelle ausgelöst, wenn eine vorbestimmte Zeitdauer seit dem Auslösen des Einspritzvorganges vergangen ist. Zum Ausführen der Zündung wird somit im Bereich unterhalb der vorbestimmten Last- bzw. Drehzahlschwelle nicht die Winkelstellung der Kurbelwelle, sondern der Ablauf einer vorbestimmten Zeitdauer seit dem Auslösen des Einspritzvorganges gemessen.

Hierdurch wird sichergestellt, daß beim Zündzeitpunkt das zugeführte Kraftstoff/Luft-Gemisch sich in einem vorbestimmten Zustand befindet, in dem es leicht gezündet werden kann. Die bei niedrigen Drehzahlen (< 2.000 U/min) auftretenden Meßungenauigkeiten bei der Bestimmung des Zündzeitpunktes in Abhängigkeit von der Kurbelwellenstellung werden vermieden, da der Zündzeitpunkt nur in Abhängigkeit vom Einspritzvorgang festgelegt wird, so daß ein sehr ruhiger Leerlauf erzielt wird.

Oberhalb der Last- bzw. Drehzahlschwelle wird der Zündzeitpunkt in an sich bekannter Weise durch Messen einer vorbestimmten Winkelstellung der Kurbelwelle bestimmt, wodurch eine bestimmte Beziehung zwischen dem Kurbelwellenwinkel des oberen Totpunktes und dem Zündwinkel auf einfache Art und Weise exakt eingehalten werden kann.

Das erfindungsgemäße Verfahren läßt sich mit sehr einfachen technischen Mitteln umsetzen und erzielt einen sensationellen Gleichlauf im Leerlaufbetrieb, so daß selbst bei einer Drehzahl von 180 U/min ein ruhiger Leerlauf einer Zweitakt-Brennkraftmaschine erfolgen kann.

Das erfindungsgemäße Verfahren kann bei allen Brennkraftmaschinen mit Einspritzvorrichtungen angewandt werden, bei welchen der Kraftstoff bzw. das Kraftstoff/Luft-Gemisch mit einem vorbestimmten Zeitablauf dem Brennraum zugeführt wird. D.h., daß der Einspritzvorgang ein zeitkonstanter Vorgang ist, dessen Zeitdauer nur von einigen Parametern abhängt, z.B. der pro Einspritzvorgang eingespritzten Kraftstoffmenge.

Nachfolgend wird die Erfindung anhand der Zeichnung beispielhaft erläutert. Es zeigen:
- Fig. 1: schematisch einen Querschnitt eines Zylinders einer Brennkraftmaschine mit Zünd- und Einspritzeinrichtungen,
- Fig. 2: den Zusammenhang zwischen der Drehzahl [U/min] und der Kurbelwellenumlaufzeit [s] in einem Diagramm,
- Fig. 3: schematisch eine nach dem Energiespeicherprinzip arbeitende Einspritzvorrichtung,
- Fig. 4: einen Querschnitt durch einen Zylinderkopf und einen oberen Bereich eines Kolbens, die für eine Direkteinspritzung und eine Direktzündung des Kraftstoffs ausgebildet sind,
- Fig. 5: einen Querschnitt durch einen Zylinderkopf und einen oberen Bereich eines Kolbens, die für eine Direkteinspritzung des Kraftstoffs ausgebildet sind,
- Fig. 6: eine Schaltung, die als Timerelement zum Messen der vorbestimmten Verzögerungszeit verwendet wird.

Das erfindungsgemäße Verfahren wurde an einer Zweitakt-Brennkraftmaschine mit zwei Zylindern angewandt. Der Hubraum dieser Brennkraftmaschine beträgt 380 cm³ und die Leistung 60 PS bei 6 500 U/min.

Als Einspritzvorrichtung wird eine nach dem Festkörper-Energiespeicherprinzip arbeitende Einspritzung verwendet (PDS-Einspritzvorrichtung), wie sie beispielsweise in den deutschen Patentanmeldungen P 195 15 781 bzw. P 195 15 782 beschrieben ist.

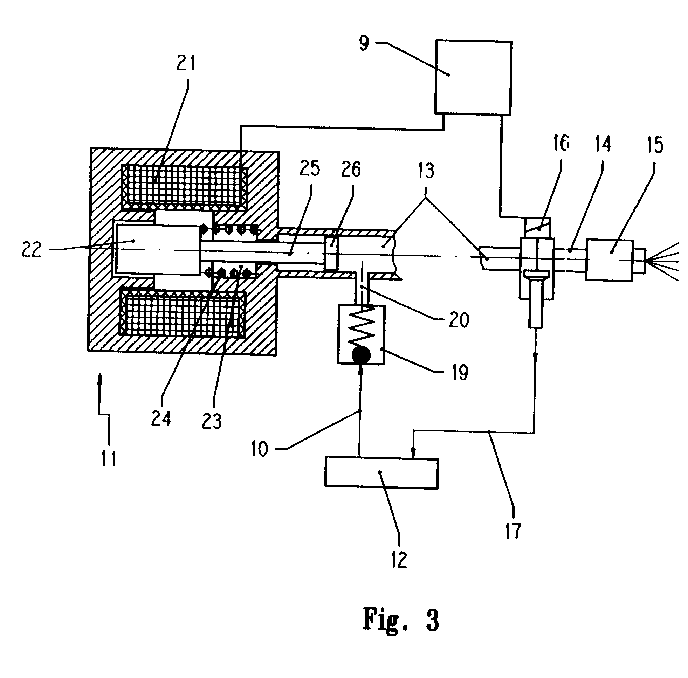

Schematisch ist das Grundprinzip einer nach dem Energiespeicherprinzip arbeitenden Einspritzvorrichtung in Fig. 3 dargestellt. Diese Kraftstoff-Einspritzvorrichtung basiert auf einer Kolbenpumpe 11 mit elektromagnetischem Antrieb zum Ansaugen von Kraftstoff aus einem Vorratsbehälter 12 sowie zum Beschleunigen des angesaugten Kraftstoffes in einer Schwungleitung 13, die über eine Druckleitung 14 an eine Einspritzdüse 15 angeschlossen ist. Ferner ist in einem Abzweig zwischen der Schwungleitung 13 und der Druckleitung 14 ein Absperrventil 16 angeordnet, das als elektromagnetisches Ventil ausgeführt ist und den Kraftstoffdurchgang zu einer Rücklaufleitung 17 steuert, die an das Absperrventil 16 angeschlossen ist und in den Vorratsbehälter 12 mündet. Die Ansteuerung des Absperrventils 16 sowie der Kolbenpumpe 11 erfolgt über die gemeinsame elektronische Steuereinrichtung 9, die an die Erregerspule des als Magnetventil ausgeführten Absperrventils 16 sowie an eine Spule des Antriebselektromagneten der Kolbenpumpe 11 angeschlossen ist. Ferner ist ein Rückschlagventil 19 in einer Ansaugleitung 20 angeordnet, die das pumpenseitige Ende der Schwungleitung 13 mit dem Vorratsbehälter 12 verbindet.

Die Kolbenpumpe 11 umfaßt eine Magnetspule 21 mit einem im Spulendurchgang angeordneten Anker 22, der als zylindrischer Körper, beispielsweise als Vollkörper, ausgebildet ist und in einer Gehäusebohrung 23 geführt ist, die sich parallel zur Zentrallängsachse der Magnetspule 21 erstreckt und mittels einer Druckfeder 24 in eine Ruhestellung vorgespannt ist, in welcher er in Fig. 3 am linken Ende der Gehäusebohrung 23 mit seiner hinteren Stirnwand anliegt. Die andere Stirnwand des Ankers 22 ist von der Feder 24 beaufschlagt, die sich am rechten Ende der Bohrung 23 an der Gehäusewandung der Pumpe 11 abstützt. Die federbeaufschlagte Stirnseite des Ankers 22 ist fest mit einer Kolbenstange 25 verbunden, an derem freien Ende ein Kolben 26, der Förderkolben der Pumpe 11, befestigt ist, der an der Innenwand der Schwungleitung 13 geführt ist und bevorzugt gegenüber dieser Wandung abgedichtet ist. Die Kolbenstange 25 durchsetzt eine Bohrung im Pumpengehäuse, deren Durchmesser geringer ist als der Durchmesser der den Anker 22 führenden Bohrung.

Die Ansaugleitung 20 mündet vor der außen gelegenen Stirnfläche des Förderkolbens 26 in die Schwungleitung 13. Das Rückschlagventil 19 in der Förderleitung 20 umfaßt beispielsweise als Ventilelement eine federvorgespannte Kugel, wobei Kugel und Feder so angeordnet sind, daß das kugelförmige Ventilelement im Rückschlagventil angehoben wird, wenn der Förderkolben 26 zum Ansaugen von Kraftstoff an dem Behälter 12 seinen Saughub durchführt, also dann, wenn der Kolben 26 in Fig. 3 eine Hubbewegung nach links ausführt, was dann der Fall ist, wenn der Magnet 21 entregt ist und der Anker 22 in seine Ruhestellung durch die Feder 24 überführt wird. Im anderen Falle, nämlich beim Förderhub des Kolbens 26, entsprechend einer Kolbenbewegung in Fig. 3 nach rechts bei erregtem Elektromagnet 21, wird das Ventilelement des Rückschlagventils 20 in seine Sperrstellung überführt, so daß die Verbindung der Schwungleitung 13 zum Vorratsbehälter 12 unterbrochen ist. Durch den Förderhub des Kolbens 26 wird die Masse des in der Schwungleitung 13 befindlichen Kraftstoffes beschleunigt und während einer durch die Steuereinrichtung 18 vorgegebenen Öffnungszeitdauer des Absperrventils 16 in die Rücklaufleitung 17 und über diese in den Behälter 12 überführt. Während dieses Zeitraums erfolgt also in erster Linie eine Beschleunigung des Kraftstoffes in der Leitung 13 und 17, und der Kraftstoffdruck ist dabei so gering, daß die in an sich bekannter Weise, beispielsweise hydraulisch, blockierte Düse 15 einen Sperrzustand einnimmt, in welchem über die Düse kein Kraftstoff auszutreten vermag.

Wenn die Kraftstoffmenge in der Schwungleitung 13 (und der Rücklaufleitung 7) einen durch die Steuereinrichtung 18 in Abhängigkeit von aktuellen Motorbetriebsbedingungen vorgegebenen Beschleunigungswert erreicht hat, wird ebenfalls unter Steuerung der Einrichtung 18 das Absperrventil geschlossen, wodurch die kinetische Energie des in den Leitungen 13 und 14 strömenden Kraftstoffes schlagartig in eine Druckstoßenergie umgewandelt wird, deren Wert so hoch ist, daß der Schließwiderstand der Düse 15 überwunden und Kraftstoff über die Düse 15 abgespritzt wird. Diese Kraftstoff-Einspritzvorrichtung ermöglicht einen diskontinuierlichen Betrieb der Kolbenpumpe, die im Zusammenhang mit dem elektromagnetisch betätigten Absperrventil 6 eine präzise Steuerung des Einspritzvorgangs erlaubt.

Diese nach dem Energiespeicherprinzip arbeitenden Einspritzvorrichtungen zeichnen sich durch Einspritzdrücke ≥ 40 bar aus, die vorzugsweise in einem Bereich um 60 bar liegen. Bei einem Einspritzdruck im Bereich von 60 bar wird mit herkömmlichen Einspritzdüsen eine Kraftstoff-Einspritzgeschwindigkeit von etwa 50 m/s erzielt. Die hohen Einspritzdrücke werden impulsförmig erzeugt, wobei durch die Dauer der Einspritzimpulse die pro Einspritzvorgang injizierte Kraftstoffmenge gesteuert wird.

Bei dem erfindungsgemäßen Verfahren wird zuerst der Zeitpunkt für das Auslösen bzw. den Beginn des Einspritzvorganges bestimmt. Dies kann in bekannter Art und Weise durch Messen einer vorbestimmten Winkelstellung der Kurbelwelle erfolgen. Wird die vorbestimmte Winkelstellung festgestellt, so wird der Einspritzvorgang ausgelöst und gleichzeitig ein Timerelement gestartet, das nach einer vorbestimmten Zeitdauer bzw. einer vorbestimmten Verzögerungszeit ein Signal zum Zünden des Kraftstoff/Luft-Gemisches im Brennraum abgibt.

Während das Timerelement die vorbestimmte Verzögerungszeit mißt, laufen in der Kraftstoff-Einspritzvorrichtung folgende Vorgänge ab:
1. Erregung der Magnetspule 21
2. Beschleunigung des Ankers 22 und des in der Schwungleitung 13 enthaltenen Kraftstoffs,
3. Übertragung der gespeicherten Energie auf den in der Druckleitung 14 befindlichen Kraftstoff,
4. Abspritzung von Kraftstoff in den Brennraum 4, wenn der Schließwiderstand der Düse 15 überwunden ist,
5. Zerstäubung und Verwirbelung des eingespritzten Kraftstoffs im Brennraum 4.

Diese beim Einspritzvorgang ablaufenden Vorgänge sind zeitkonstant, d.h., die Zeitdauer ist vorbestimmt bzw. hängt von wenigen Parametern ab, wie z.B. der pro Einspritzvorgang eingespritzten Kraftstoffmenge, so daß zum Zeitpunkt des Auslösens des Einspritzvorganges feststeht, wann der in den Brennraum 4 eingespritzte Kraftstoff sich im Idealzustand für eine Zündung befindet.

In Fig. 1 ist eine kleine Kraftstoffwolke 28 für den Leerlaufbetrieb und eine große Kraftstoffwolke 29 für den Lastbetrieb dargestellt. Der ideale Zündzeitpunkt hängt davon ab, wie sich die gesamte Kraftstoffwolke im Brennraum 4 verteilt und ob sich im Bereich einer Zündkerze 30 ein für die Zündung ausreichend fettes Kraftstoff/Luft-Gemisch angereichert hat. Die Erfinder haben festgestellt, daß sich der Zeitpunkt für eine ideale Zündung, insbesondere im Leerlaufbetrieb, zu einer vorbestimmten, nur von wenigen Parametern abhängigen Verzögerungszeit bezüglich des Beginns des Einspritzvorgangs einstellt.

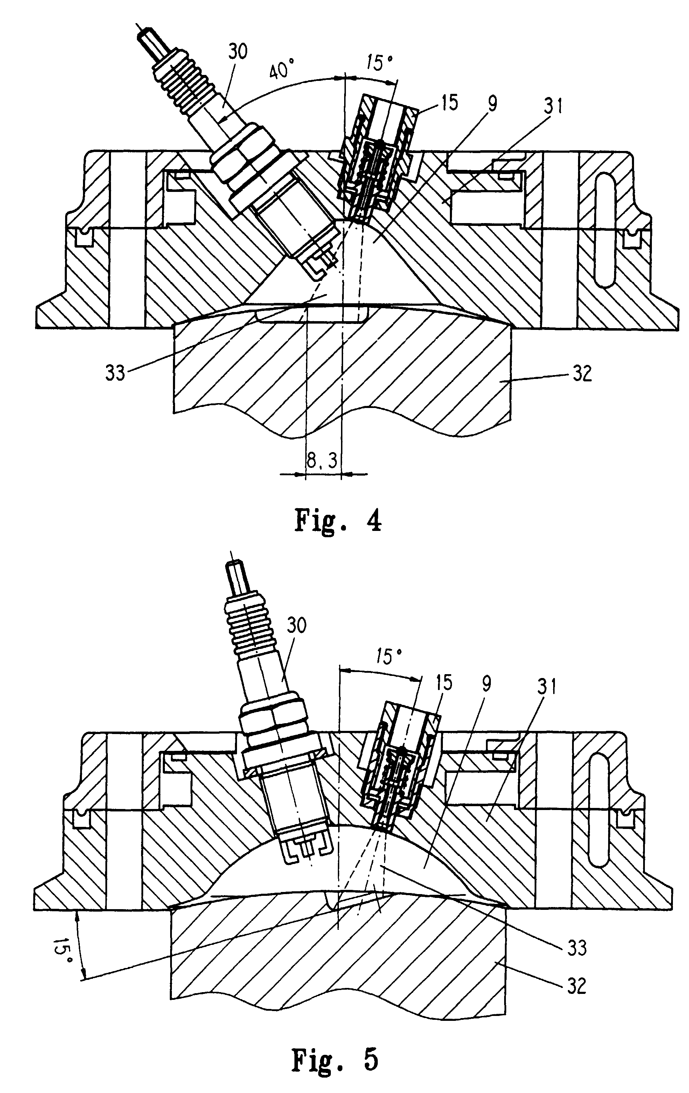

Die Zweitakt-Brennkraftmaschine, bei der das erfindungsgemäße Verfahren angewandt wurde, ist für eine Direkteinspritzung mit Zylinderköpfen 31 und Kolben 32 ausgestattet worden, wie in Fig. 4 bzw. 5 dargestellt.

In den Fig. 4 und 5 sind die Kolben 32 jeweils am oberen Totpunkt dargestellt, so daß zwischen den Kolben 32 und dem Zylinderkopf 31 jeweils ein domförmiger Brennraum 4 ausgebildet ist. In diesem Brennraum 4 wird mit der Einspritzdüse 15 der Kraftstoff eingespritzt, der im Brennraum 4 einen Einspritzkegel 33 bildet.

Bei der Ausführungsform gemäß Fig. 4 berührt die Zündkerze 30 den Einspritzkegel 33, so daß der eingespritzte Kraftstoffstrahl direkt gezündet werden kann. Bei dieser Ausführungsform erfolgt somit sowohl eine Direkteinspritzung als auch eine Direktzündung, da der unmittelbar eingespritzte Kraftstoffstrahl von der Zündkerze 30 gezündet wird.

Bei der Ausführungsform gemäß Fig. 5 berührt die Zündkerze 30 nicht den Einspritzkegel 33. Der eingespritzte Kraftstoff wird am Kolben 32 reflektiert und erst danach durch die Zündkerze 30 gezündet. Bei dieser Ausführungsform erfolgt somit eine Direkteinspritzung, aber keine Direktzündung.

Beide Ausführungsformen eignen sich für die erfindungsgemäße zeitverzögerte Zündung.

Bei der Ausführungsform mit der Direktzündung liegt die vorbestimmte Zeitdauer der Verzögerungszeit im Bereich zwischen 0,5 Millisekunden und 1 Millisekunde und nimmt im Normalbetrieb vorzugsweise einen Wert von 0,7 Millisekunden ein. Die Verzögerungszeit wird hierbei vorzugsweise in Abhängigkeit der Temperatur der Brennkraftmaschine variiert, wobei die Temperatur am Zylinderkopf 31 gemessen wird. Bei einem Kaltstart wird die Verzögerungszeit auf etwa 0,5 Millisekunden und bei heißem Zylinderkopf 31 auf 1 Millisekunde eingestellt. Weitere Parameter für die Einstellung der Verzögerungszeit zwischen dem Beginn des Einspritzvorganges und dem Zündzeitpunkt werden nicht berücksichtigt. Eine solche Steuerung des Zündzeitpunktes kann auf einfache Art und Weise und mit geringem Rechenaufwand erfolgen, da die geeignete Verzögerungszeit nur in Abhängigkeit eines einzigen Parameters, der Zylinderkopftemperatur, ermittelt wird.

Mit dieser Ausführungsform wurde ein sensationeller Gleichlauf im Leerlaufbetrieb erzielt, so daß selbst bei einer Drehzahl von 180 U/min ein ruhiger Leerlauf der Zweitakt-Brennkraftmaschine erfolgte. Diese untere Drehzahlgrenze von 180 U/min war lediglich durch die bei den Testversuchen verwendete Steuereinrichtung vorgegeben, da sie keine langsameren Drehzahlen berechnen kann.

Ein Leerlaufbetrieb bei einer Drehzahl von 180 U/min bedeutet eine deutliche Kraftstoffeinsparung gegenüber üblichen Leerlaufdrehzahlen, die ein Vielfaches der hier erreichten Leerlaufdrehzahl betragen.

Mit der Ausführungsform gemäß Fig. 5, bei der der Kraftstoff am Kolben 32 reflektiert wird, wurde auch eine sehr hohe Laufruhe erzielt. Die Verzögerungszeit ist aufgrund der Reflektion des Kraftstoffes länger als bei direkter Zündung, wobei die Verzögerungszeit etwa im Bereich zwischen 3,5 Millisekunden und 5,5 Millisekunden liegt. Es hat sich herausgestellt, daß die Verzögerungszeit auf einen einzigen konstanten Wert eingestellt werden kann, der vorzugsweise bei etwa 4,5 Millisekunden liegt. Eine solche konstante Verzögerungszeit kann mit sehr einfachen technischen Mitteln realisiert werden, wobei hierzu die Verwendung eines Mikroprozessors nicht notwendig ist.

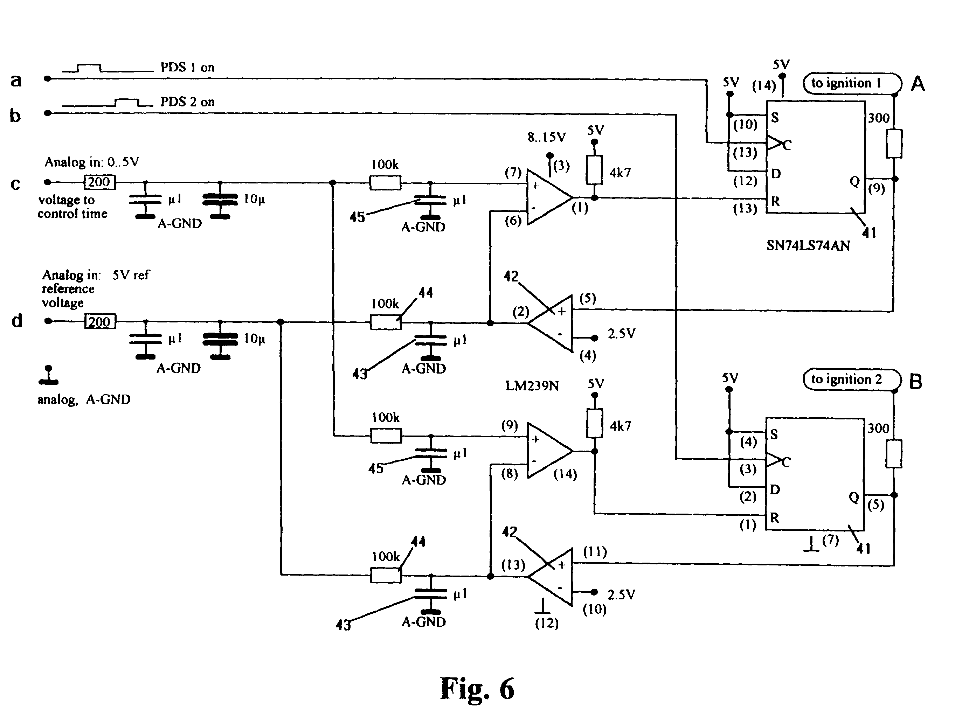

Das Timerelement kann sowohl als digitaler Timer als auch als einfache Hardware-Schaltung (Fig. 6) realisiert werden.

Die Hardware-Schaltung ist für eine Zweizylinder-Brennkraftmaschine ausgebildet mit jeweils einem Eingang a, b, an dem das Trigger- bzw. Steuersignal für den Einspritzvorgang angelegt wird. An einem weiteren Eingang c wird eine Steuerspannung angelegt, die die Verzögerungszeit festlegt. Bei einer konstanten Verzögerungszeit kann die Steuerspannung an einem Potentiometer abgegriffen werden, und bei einer sich variierenden Verzögerungszeit wird die Steuerspannung von der Steuereinrichtung geliefert.

Eine positive Anstiegsflanke eines der an a, b anliegenden Triggersignale schaltet einen Flip-Flop 41, wodurch der Ausgang Q des Flip-Flops auf Spannung geschaltet wird. Hierdurch wird der Ausgang eines Komparators 42 geöffnet, so daß ein Kondensator 43 über einen Widerstand 44 geladen wird. Die am Kondensator 43 anliegende Spannung wird mit einer an einem entsprechenden Kondensator 45 anliegenden Steuerspannung verglichen. Sind die Spannungen gleich groß, wird das Flip-Flop 41 zurückgesetzt, wodurch an A, B ein Steuersignal für die Zündung abgegeben wird.

Das erfindungsgemäße Verfahren zum Steuern des Zündzeitpunktes läßt sich auch mit einem herkömmlichen Verfahren zum Steuern des Zündzeitpunktes kombinieren, bei dem der Zündzeitpunkt in Abhängigkeit einer vorbestimmten Winkelstellung der Kurbelwelle bestimmt wird. Hierbei wird das erfindungsgemäße Verfahren vorzugsweise unterhalb einer Last- oder Drehzahlschwelle und das herkömmliche Verfahren oberhalb dieser Schwelle angewandt. Eine solche Drehzahlschwelle liegt etwa im Bereich von 2 000 bis 4 000 U/min.

Zusammenfassend wird festgestellt, daß mit dem erfindungsgemäßen Verfahren der zeitverzögerten Zündung es möglich ist, mit einfachen technischen Mitteln den Zündzeitpunkt zu ermitteln, wobei eine hervorragende Laufruhe, insbesondere im Leerlaufbetrieb, erzielt wird.

## Patentansprüche

1. Verfahren zum Steuern der Zündung in einer Zweitakt-Brennkraftmaschine mit einer Hochdruck-Einspritzvorrichtung zum Einspritzen von Kraftstoff in einen Brennraum der Brennkraftmaschine, wobei der Kraftstoff in den Brennraum direkt eingespritzt wird und sich mit der darin befindlichen Luft zu einem Kraftstoff/Luft-Gemisch vermischt,
oberhalb einer bestimmten Last- oder Drehzahlschwelle durch Messen einer vorbestimmten Winkelstellung der Kurbelwelle ein Zündzeitpunkt bestimmt wird, an dem eine Zündung des Kraftstoff/Luft-Gemisches ausgeführt wird, und
unterhalb der Drehzahlschwelle ein Steuersignal für den Einspritzvorgang eine Messung einer vorbestimmten Verzögerungszeit startet, deren Ablauf den Zündzeitpunkt festlegt, an dem ein Steuersignal für die Zündung abgegeben wird.

2. Verfahren nach Anspruch 1,
**dadurch gekennzeichnet,**
daß als Einspritzvorrichtung eine nach dem Energiespeicherprinzip arbeitende Einspritzvorrichtung verwendet wird.

3. Verfahren nach Anspruch 2,
**dadurch gekennzeichnet,**
daß eine nach dem Festkörper-Energiespeicherprinzip arbeitende Einspritzvorrichtung verwendet wird.

4. Verfahren nach einem oder mehreren der Ansprüche 1 bis 3,
**dadurch gekennzeichnet,**
daß der Zeitpunkt, an dem der Einspritzvorgang ausgelöst wird, durch Messen einer vorbestimmten Winkelstellung einer Kurbelwelle bestimmt wird.

5. Verfahren nach einem oder mehreren der Ansprüche 1 bis 4,
**dadurch gekennzeichnet,**
daß die vorbestimmte Verzögerungszeit konstant ist.

6. Verfahren nach einem oder mehreren der Ansprüche 1 bi 4,
**dadurch gekennzeichnet,**
daß die vorbestimmte Verzögerungszeit nach Maßgabe eines oder mehrerer Parameter, wie z.B. der Zylinderkopftemperatur und/oder der pro Einspritzvorgang eingespritzten Kraftstoffmenge, ermittelt wird.

7. Verfahren nach einem oder mehreren der Ansprüche 1 bis 6,
**dadurch gekennzeichnet,**
daß der beim Einspritzen erzeugte Kraftstoffstrahl direkt gezündet wird.

8. Verfahren nach Anspruch 7,
**dadurch gekennzeichnet,**
daß die vorbestimmte Verzögerungszeit im Bereich von 0,5 ms bis 1 ms liegt.

9. Verfahren nach Anspruch 8,
**dadurch gekennzeichnet,**
daß der Kraftstoff nach dem Einspritzen an einem Kolben reflektiert wird und nach der Reflektion am Kolben von einer Zündkerze gezündet wird.

10. Verfahren nach Anspruch 9,
**dadurch gekennzeichnet,**
daß die vorbestimmte Verzögerungszeit im Bereich von 3,5 bis 5,5 ms liegt.

11. Verfahren nach Anspruch 9 und/oder 10,
**dadurch gekennzeichnet,**
daß der Kraftstoff in einer Mulde am Kolben reflektiert wird.

12. Verfahren nach einem oder mehreren der Ansprüche 1 bis 11,
**dadurch gekennzeichnet,**
daß zum Messen der vorbestimmten Verzögerungszeit eine Hardware-Schaltung vorgesehen ist, die das Signal zum Auslösen des Einspritzvorganges als Triggersignal zum Messen der vorbestimmten Verzögerungszeit verwendet.

13. Verfahren nach einem oder mehreren der Ansprüche 1 bis 12,
**dadurch gekennzeichnet,**
daß die Drehzahlschwelle im Bereich von 2.000 bis 4.000 U/min liegt.

## Claims

1. A method for controlling the ignition in a two-stroke internal combustion engine having a high-pressure injection device for injecting fuel into a combustion chamber of the internal combustion engine, the fuel being directly injected into the combustion chamber and mixing with the air located therein to form a fuel-air mixture, an ignition time at which ignition of the fuel/air mixture is carried out being determined above a specific load threshold or rotational speed threshold by measuring a predetermined angular position of the crankshaft, and below the rotational speed threshold a control signal for the injection process starting a measurement of a predetermined delay time, the expiry of which specifies the ignition time at which the control signal for the ignition is outputted.

2. A method according to Claim 1, characterised in that the injection device used is an injection device operating according to the energy storage principle.

3. A method according to Claim 2, characterised in that an injection device operating according to the solid-state energy storage principle is used.

4. A method according to one or more of Claims 1 to 3, characterised in that the time at which the injection process is triggered is determined by measuring the predetermined angular position of a crankshaft.

5. A method according to one or more of Claims I to 4, characterised in that the predetermined delay time is constant.

6. A method according to one or more of Claims 1 to 4, characterised in that the predetermined delay time is determined in accordance with one or more parameters, such as the cylinder head temperature and/or the quantity of fuel injected per injection.

7. A method according one or more of Claims I to 6, characterised in that the fuel jet produced during the injection is ignited directly.

8. A method according to Claim 7, characterised in that the predetermined delay time lies in the range of between 0.5 ms to 1 ms.

9. A method according to Claim 8, characterised in that after the injection, the fuel is reflected at a piston and after the reflection it is ignited at the piston by a spark plug.

10. A method according to Claim 9, characterised in that the predetermined delay time lies in the range of between 3.5 to 5.5 ms.

11. A method according to Claim 9 and/or 10, characterised in that the fuel is reflected in a depression on the piston.

12. A method according to one or more of Claims 1 to 11, characterised in that in order to measure the predetermined delay time, a hardware circuit is provided which uses the signal for triggering the injection process as a trigger signal for measuring the predetermined delay time.

13. A method according to one or more of Claims 1 to 12, characterised in that the rotational speed threshold lies in the range of between 2000 and 4000 rpm.

## Revendications

1. Procédé de régulation de l'allumage dans un moteur à combustion interne à deux temps, équipé d'un dispositif d'injection à haute pression, pour injecter du carburant dans une chambre de combustion du moteur à combustion interne, le carburant étant injecté directement dans la chambre de combustion et se mélangeant à l'air s'y trouvant, pour former un mélange air/carburant,
au-dessus d'un seuil déterminé de charge ou de vitesse de rotation. par mesure d'une position angulaire prédéterminée du vilebrequin, étant déterminé un moment d'allumage auquel un allumage du mélange air/carburant est effectué, et
au-dessous du seuil de vitesse de rotation, un signal de commande destiné au processus d'injection lance une mesure d'un temps de retardement prédéterminé, dont l'écoulement fixe le moment d'allumage, auquel est fourni un signal de commande destiné à l'allumage.

2. Procédé selon la revendication 1, caractérisé en ce qu'on utilise, comme dispositif d'injection, un dispositif d'injection travaillant selon le principe de l'accumulation d'énergie.

3. Procédé selon la revendication 2, caractérisé en ce qu'on utilise un dispositif d'injection travaillant selon le principe d'accumulation d'énergie avec semi-conducteurs.

4. Procédé selon une ou plusieurs des revendications 1 à 3, caractérisé en ce que le moment auquel le processus d'injection est déclenché est déterminé par une mesure d'une position angulaire prédéterminée d'un vilebrequin.

5. Procédé selon une ou plusieurs des revendications 1 à 6, caractérisé en ce que le temps de retardement prédéterminé est constant.

6. Procédé selon une ou plusieurs des revendications 1 à 4, caractérisé en ce que le temps de retardement prédéterminé est déterminé selon la valeur d'un ou plusieurs paramètres, tels que, par exemple, la température de la culasse et/ou la quantité de carburant injectée à chaque processus d'injection.

7. Procédé selon une ou plusieurs des revendications 1 à 6, caractérisé en ce que le jet de carburant généré lors de l'injection est allumé directement.

8. Procédé selon la revendication 7, caractérisé en ce que le temps de retardement prédéterminé est situé dans la plage allant de 0,5 ms à 1 ms.

9. Procédé selon la revendication 8, caractérisé en ce que le carburant, après injection, est réfléchi sur un piston et est allumé par une bougie d'allumage, après réflexion sur le piston.

10. Procédé selon la revendication 9, caractérisé en ce que le temps de retardement prédéterminé est situé dans la plage allant de 3,5 à 5,5 ms.

11. Procédé selon les revendications 9 et/ou 10, caractérisé en ce que le carburant est réfléchi dans une auge ménagée sur le piston.

12. Procédé selon une ou plusieurs des revendications 1 à 11, caractérisé en ce que, pour effectuer la mesure du temps de retardement prédéterminé, est prévu un circuit informatique qui utilise le signal destiné au déclenchement du processus d'injection, comme signal de déclenchement pour effectuer la mesure du temps de retardement prédéterminé.

13. Procédé selon une ou plusieurs des revendications 1 à 12, caractérisé en ce que le seuil de vitesse de rotation est situé dans la plage allant de 2000 à 4000 tr/mn.
